(19) Europäisches Patentamt
European Patent Office
Office européen des brevets

(11) **EP 4 131 674 A1**

(12) **EUROPEAN PATENT APPLICATION**

(43) Date of publication:
**08.02.2023 Bulletin 2023/06**

(21) Application number: **21190032.9**

(22) Date of filing: **06.08.2021**

(51) International Patent Classification (IPC):
*H01S 3/10* *(1968.09)*     *H01S 3/11* *(1968.09)*
*H01S 3/23* *(1974.07)*     *H01S 3/06* *(1968.09)*
*H01S 3/08* *(1968.09)*     *H01S 3/081* *(1974.07)*
*H01S 3/094* *(1974.07)*     *H01S 3/0941* *(1995.01)*
*H01S 3/105* *(1985.01)*     *H01S 3/106* *(1985.01)*

(52) Cooperative Patent Classification (CPC):
**H01S 3/10046; G02F 1/35; H01S 3/0811;
H01S 3/1118; H01S 3/2383;** H01S 3/0602;
H01S 3/08054; H01S 3/08068; H01S 3/0817;
H01S 3/094061; H01S 3/09415; H01S 3/105;
H01S 3/106; H01S 3/1112; H01S 2301/02

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ETH Zurich
8092 Zurich (CH)**

(72) Inventors:
• **PHILLIPS, Christopher
  8046 Zurich (CH)**
• **PUPEIKIS, Justinas
  8046 Zurich (CH)**
• **WILLENBERG, Benjamin
  8050 Zurich (CH)**
• **KELLER, Ursula
  8142 Uitikon (CH)**

(54) **RADIATION SOURCE**

(57)     In accordance with an aspect of the invention, an apparatus (1) for emitting electromagnetic radiation is provided. The apparatus comprises a gain element (4), an optical arrangement defining a resonator and arranged to re-direct radiation emitted by the gain element (4) along a beam path back onto the gain element (4), the optical arrangement comprising an output coupler (5) configured to couple a portion of the radiation in the resonator out of the resonator, and a pump arrangement configured to pump the gain element. The optical arrangement further comprises a passive device (10), for example a biprism, placed in the resonator in the beam path, the passive device having at least two surface portions (11, 12) at an angle to each other. The passive device (10) is arranged to direct first radiation portions (31) and second radiation portions (32) of the radiation, which first and second radiation portions (31, 32) are incident on different ones of the surface portions (11, 12), to be spatially separated. The apparatus is for example suitable as a source of dual-comb pulsed laser radiation.

Fig. 1

## Description

FIELD OF THE INVENTION

The invention is in the field of radiation sources of pulsed electromagnetic radiation.

BACKGROUND OF THE INVENTION

Ultrashort pulsed lasers are powerful tools in industry and science due to their pulse shape in the time domain and their comb-like structure in the frequency domain. A particularly interesting configuration involves synchronizing a pair of these lasers together such that they have a slightly different pulse repetition rate. The resulting pair of lasers is called a 'dual comb', short for 'dual optical frequency comb'. The two pulsed lasers each generate a frequency comb in the (optical) frequency domain and should have a slight difference in pulse repetition rate (a few Hz to several MHz), so that the beat signal of the two combs is a comb with lower frequency (for example in the microwave region). Dual combs may especially be interesting for building optical sensors. However, dual-comb laser sources are currently very expensive and bulky since they are usually synthesized by locking two complicated lasers together with advanced stabilization electronics. This leads to high cost of such devices hindering their wide-spread adoption outside of research labs.

One strategy to overcome this problem is to generate dual-comb lasers from a single laser cavity arrangement. By generating both combs in one cavity, high mutual coherence is achieved in a simple setup without needing active feedback. However, there is a lack of methods that simultaneously offer minimal cross-talk between the combs, adjustable repetition rate difference, sufficiently high mutual coherence, and flexible laser performance in terms of power, pulse duration, and repetition rate.

The dual comb laser sources have remarkable properties which can be understood in either the time or frequency domain: Having regard to the time domain, the relative delay between the pulses from the two combs is swept over time, and this sweep rate can be far faster than is possible by mechanical means. Concerning the frequency domain, the repetition rate difference enables the individual frequency comb lines of the two lasers to be resolved by photodetection, in a technique called dual comb spectroscopy.

These properties of dual combs enable many practically important sensing applications including ultra-high-resolution Fourier-transform spectroscopy (FTS), equivalent time sampling via pump-probe measurements, laser distance ranging (LIDAR), hyperspectral microscopy, and many other sensing methods.

SUMMARY OF THE INVENTION

It is an object of the present invention to provide a radiation source of pulsed electromagnetic radiation generating two almost identical trains of radiation pulses of slightly different or even equal pulse repetition frequencies, which radiation source overcomes drawbacks of prior art radiation sources. Especially, it should be possible to manufacture and operate the radiation source at less cost compared to the abovediscussed radiation sources. It is a further object of the present invention to provide a radiation source outputting two almost identical radiation beams with strongly correlated properties.

These and other objects are achieved by a radiation source as defined in the claims, comprising a passive device, for example a biprism, with surface portions at a (relatively small) angle to each other so that there are distinct angles at distinct points of incidence of the beam within the laser resonator.

Due to the surface portions being at an angle to each other, the first and second radiation portions, which are spatially separated (this does not exclude the possibility that the radiation portions may overlap or even coincide at certain positions within the resonator) are well-defined stable radiation beams circulating in the resonator independently of each other. Thus, the passive device leads to a multiplexing of the resonator, and the apparatus will generate at least two independent radiation beams coupled out through the output coupler, the two independent radiation beams having strongly correlated properties.

The approach according to the invention yields spatially distinct cavity modes, which allows for designs with two (or more than two) laser beams coming out of a single resonator, thus with a minimum of components. Nevertheless, as explained hereinafter, a design with minimal cross-talk between the spatially distinct cavity modes is possible. Also, compared to a pair of separate lasers, a very fine tuning of the repetition rate difference becomes possible for example by adjusting the position of the passive device within the resonator. Finally, since the components may be shared by the radiation portions, fluctuations generally will affect both radiation portions, whereby relative fluctuations are smaller than with an approach with separate lasers.

Compared to the approach taught in WO 2016/049787, the approach according to the present invention in addition has the substantial advantage that standard laser components may be used, without the need for any birefringent crystals, which generally make a laser cavity design more challenging and implies trade-offs in terms of efficiency and flexibility. Also, approach of the present invention can be scaled up to more than two beams coming out of a single apparatus, while the approach of WO 2016/049787 is restricted to exactly two.

The passive device (or, in case of a plurality of passive devices, at least one of the passive devices, for example all of them) may be a monolithic device, with both surface portions being surface portions of a common monolithic body. This features the advantage that fluctuations of properties of the body, such a temperature fluctuation, are the same for both radiation portions.

For example, the passive device may be a biprism. Biprisms are prism-like optical devices having an apex angle that is almost 180° so that the angle between the surface portions leading into this apex angle are at a small angle (δ) to each other, which small angle may be at most 10° or at most 5°, for example about 1-2°. The surface portion opposed to the apex may be essentially flat. A special case of a biprism is a device with δ<0°, i.e. a concave structure. In such a case, the condition maybe -10°δ<0°. Other angles, especially angles having an absolute value of 10° or more are not excluded. The choice of the angle of the biprism depends, in addition to depending on the cavity design, of course also on the refractive index of the biprism material if the biprism is a transmissive biprism.

The biprism may be placed to be operated in transmission (i.e., the biprism then may be transparent for the radiation in the resonator, and the radiation portions are transmitted through the surface portions that are at a small angle to each other). The backside of the biprism (the surface portion opposed to the apex) may be flat or may have a structure enabling it to perform a further function, such as a small curvature for having a lens effect, etc. Also, the biprism may be used for influencing the polarization, for example by causing the backside to be at the Brewster angle.

Alternatively, the biprism may be operated in reflection, i.e., the radiation portion are reflected by the respective surface portions. In the latter case, the structure of the backside of the biprism does not play any role and may in many embodiments be arbitrary. However, the backside may in other embodiments be constrained by other laiser configurations. For example, this side may be coated such that it is transmissive for the residual pump light that is not absorbed by the gain medium. So this surface can optionally be designed with a useful feature.

As an alternative to being a biprism, the passive device may be a different passive optical device - monolithic or comprising a plurality of parts - with at least two surface portions at an angle to each other.

Generally, as is the case for a biprism, the surface portions at an angle to each other may be discrete flat surface portions.

Another alternative implementation to the passive device would be a refractive index modulation, in the shape of a biprism, created in a planar waveguide structure.

In a special group of embodiments, however, the surface portions are not discrete flat surface portions but formed as two different spots on a surface that is not flat but also not spherical or near-spherical. The angle is then defined as the angle between the tangential planes at the position of incidence. An example of an embodiment of a device of this special group is an axicon, i.e. a body with a conical, but not spherical or near-spherical surface. Also in such an embodiment, the at least two (a family of) radiation portions are discrete, each forming a beam with a beam axis and with an intensity distribution around the beam axis. The intensity may fall off as a function of the distance from the beam axis at least starting at a certain radial distance from the beam axis, which distance on the passive component is smaller than the mutual distance of the beam axes. Generally, in embodiments with surface portions that are not flat the condition is that a plurality of discrete, stable fundamental Gaussian beams may coexist in the cavity. This would for example not be the case for spherical surfaces

The passive component, therefore, even in embodiments with non-flat surfaces, is in contrast to a use of for example a converging or diverging lens that may also act to direct different radiation portions into different directions but that will not cause the existence of discrete beams with separate beam axes.

The properties of the radiation emitted by the apparatus may be tunable by adjusting a position of the passive device within the resonator. For example, the apparatus may comprise an adjustment mechanism for adjusting the position of the passive device relative to the other components of the optical arrangement.

A movable passive device may thus, in the case of emission of pulsed radiation as discussed hereinafter, be used for the purpose of controlling the dual-comb properties (repetition rate difference or carrier envelope offset frequency difference between the two combs). Also, this control could be used for locking one of these signals to an electronic or optical reference signal. Alternatively, it could be used to sweep the relative delay between the two combs over a certain range according to the needs of an application.

The optical arrangement may comprise two end reflectors, whereby the resonator supports standing waves. Then, one of the end reflectors may optionally be constituted by the output coupler being a mirror with some transparency. It is, however, not excluded that the resonator is a ring resonator.

If the apparatus may especially be a source of pulsed radiation by comprising a mode locker. The first second radiation portions will then cause a first and a second train of laser pulses to be coupled out of the optical arrangement.

In these cases, because the pulse repetition rate depends on the optical path (to be precise, the pulse repetition frequency is determined by the group index and not the refractive index of the intracavity materials, so that the deciding quantity is the optical path length being the product of the geometric length of the path the radiation follows, and the group index of the medium through which it propagates; the pulse repetition frequency is inversely proportional to the thus defined optical path length.), this will cause the two pulse trains with potentially different intracavity optical path lengths. As a consequence, the radiation source may emit two trains of pulses with possibly slightly different pulse repetition rates. Also, due to the potentially slightly different intracavity optical path lengths, the frequencies of the peaks in the optical spectrum will have slightly different spacing.

Therefore, the radiation source is suitable for producing two or more trains of radiation pules with slightly different or equal pulse repetition frequencies and with strongly similar other properties (fluctuations etc.).

As an alternative to being a source of pulsed radiation, the apparatus may be a source of continuous-wave (CW) radiation. The apparatus is then a source of two noisecorrelated outputs, i.e. for example two CW laser beams whose optical frequencies have correlated fluctuations.

The gain element may be a laser gain element, i.e. a gain element that is pumped to have population inversion, whereby the laser beam is created by stimulated emission.

The gain element may be monolithic. Alternatively, it may comprise two gain element portions arranged next to each other, such that one radiation portion is incident of one of the gain element portions and the other gain element is incident on the other gain element portion.

Therefore, in the apparatus, two for example modelocked laser beams share the same laser resonator components. The radiation portions may use the gain element as a common laser gain element, although possibly with spots at different locations on the gain element. Also, the radiation portions may have a common output coupler. Also the pump arrangement can be shared. This has a big advantage compared to two separated laser systems. The complexity and size of the setup is drastically reduced. Fluctuations in properties of the components that interact with the radiation portions are the same if the components are shared, so that the relative stability (the stability of differences between the radiation portions) is high. Also, less optical elements are needed compared to the prior art. This leads to a strong reduction of the costs, needed to generate two laser beams.

The gain element may be optically pumped or comprise an electrical pump configured to inject charge carriers into the gain element if the gain element is a semiconductor structure. More in general, any suitable pumping arrangement may be used.

In a group of embodiments, the apparatus is end pumped, meaning that the gain element is located at or close to an end mirror of the laser resonator. For example, the gain element may belong to a monolithic mirror structure, for example of layers, wherein the gain element is a semiconductor gain element emitting in an out-of-plane direction. Alternatively, the gain element may be separate from the end mirror but may be located close to it (for example the distance between the end mirror and the gain element amounting to not more than 5% or not more than 3%, 2% or not more than 1% of the optical beam path length between the end mirrors of the laser resonator; more in general the suitable upper bounds may depend on the cavity length, the beam size in the cavity, the gain medium length, etc.).

The gain element may be any suitable gain element. Especially, the gain element may be a block having surfaces that are flat and polished and made of a crystalline ('gain crystal'), polycrystalline, or amorphous material that is doped with active ions for laser operation such as Yb, Er, Nd, Tm, Ho, Ti, Cr, or other dopants. Alternatively, the gain element may be a semiconductor gain element, such as a layered structure of semiconductor layers, for example emitting out-of-plane (a vertically emitting structure; VECSEL).

Alternatively to being a laser gain element, the gain element may also be an optical parametric amplification device such as a phase-matched or quasi-phase-matched material exploiting the second- or third-order optical nonlinearity of that material. The apparatus is then based on synchronously-pumped optical parametric oscillation, utilizing a cavity having a length matched to a pump pulse train. The optical cavity may have different round-trip losses for the interacting waves, for example it may have low losses (<25% or <15% or <10%) for the resonant signal wave, but high losses for the idler and pump waves. Alternatively, it may be doubly-resonant, having low losses for both the signal and idler waves.

In embodiments, the optical arrangement comprises a mode locker placed in the laser resonator beam path. The mode locker causes the radiation in the laser resonator (intracavity radiation) to be pulsed radiation. This ensures that output radiation has a certain spectral width making a plurality of peaks in the optical spectrum and consequently a frequency comb possible.

Especially, the mode locker may be a passive mode locker, such as a mode locker comprising a saturable absorber. The saturable absorber may for example be integrated in a mirror structure so that the saturable absorber is a saturable absorber mirror, which can be placed to be an end mirror of the resonator, or alternatively can be a folding mirror thereof. The passive mode locker may comprise a semiconductor material saturably absorbing intracavity radiation. Also other saturable absorber materials (such as graphene etc.) or other passive mode locker means such as a Kerr lens mode locker (KLM) are not excluded.

The mode locker may be a common mode locker for both radiation portions. Hence, fluctuations such as fluctuations caused by temperature changes etc. are common for both radiation portions. Nevertheless, the mode locker may be placed such that the two radiation portions are incident on different, spatially separated spots, whereby crosscoupling problems or parasitic behavior problems are avoided.

A particularly simple set-up results if a saturable absorber serving as the mode locker is integrated in a monolithic gain structure, especially a vertically emitting semiconductor structure (as known from VECSELs), that also comprises the gain element. Monolithic gain structures for optically pumped VECSELs with an integrated saturable absorber are for example described in WO 2001/059895 and in WO 2005/098573.

An integrated set-up in which the gain element and further elements, for example a mirror and/or a saturable absorber, are integrated in a common monolithic gain structure, is also possible with other gain elements, for example a laser gain element mounted on a mirror, possibly with the saturable absorber being a further layer of the monolithic gain structure.

Alternative and/or further measures of integration are possible. For example, the passive device can be part of a common monolithic structure that also comprises the gain element and may further comprise an intermediate layer for example a bonding and/or heat spreading layer.

Further possibilities may include:

- Polishing of the gain medium into the shape of the passive device, for example biprism

- Optical bonding of the biprism to the gain element or, if present the saturable absorber device, such as saturable absorber mirror

- The structure could have a biprism-like volume removed.

It is even possible to implement the invention in a monolithic cavity design, in which the end reflectors (one of them being an output coupler), the gain element, the saturable absorber and the passive device are all elements of a monolithic resonator structure. Such an integrated design has a particularly compact and simple design.

In other embodiments, in addition to the mentioned elements, the optical arrangement defining the laser resonator may optionally also comprise at least one folding mirror. Folding mirrors or other radiation re-directors make larger laser resonators on a limited space possible. If such a folding mirror is present, it may optionally comprise at least one of the mode locker (such as the saturable absorber) and of the gain element, and/or it may be the output coupler. Such elements can also be represented by coated end facets of a solid-state element re-directing the radiation portions internally, in a monolithic resonator design.

The following design considerations may be applicable:

For free-space optical cavities, generally, a stable cavity is formed when the optical arrangement comprises arrangement of mirrors such that there is a closed optical beam path, and the curvatures on the mirrors are suitable to form a stable Gaussian beam that reproduces itself on each round trip through the cavity.

By adding a mode-locking element such as a SESAM® to the cavity, the system can be designed to produce ultrashort pulses. There is then a single pulse circulating in the cavity, and part of it is out-coupled after each round trip. The periodicity of the resulting output pulse train gives rise to an optical frequency comb structure. The fluctuations in the optical delay and carrier envelope phase experienced per round trip in the cavity couple to the noise properties of the frequency comb. Therefore, these fluctuations in delay and phase should be kept small.

For dual-comb systems, as achieved by the apparatus according to the present invention in embodiments with mode locking, ideally this goal applies to both combs, but it applies most critically to the *relative fluctuations* between the two combs. In other words, in embodiments it applies to the repetition rate difference $\Delta f_{rep}=f_{rep,comb2}-f_{rep,comb1}$ and the carrier envelope offset frequency difference $\Delta f_{CEO}=f_{CEO,comb2}-f_{CEO,comb1}$.

Various mechanisms lead to fluctuations in these properties, including intensity noise in the pump laser, vibrations, and acoustic noise. Due to the difficulties in detecting and stabilizing all properties of the optical frequency comb, in embodiments a highdegree of passive correlation between the fluctuations of the two combs is achieved, i.e. that the noise in the relative fluctuations in the optical delay and optical phase shift are small. These goals are almost ideally achievable by the approach according to the invention.

Especially, in embodiments the following may apply:

- A shared set of cavity components (enabled by the biprism, and also by some other techniques), i.e. the first and second radiation portions all share the same elements of the optical arrangement - every element of the optical arrangement interacts with both radiation portions

- Paths through the cavity are similar, such that the fluctuations in repetition rate seen by each comb are similar, apart from the measures to obtain a slightly distinct beam paths for a small difference in the repetition rate and the carrier envelope frequency, as discussed in this text. The path length difference may for example be less than 1:500, 1:1000, less than 1:5'000 or 1:10'000 or even 1:50'000 or less (all the way down 1:500'000 or even down to zero) of a beam path of one of the beam portions. In addition or as an alternative, path length differences may be not more than 1 mm, or not more than 0.5 mm.

- Path lengths through optical materials as similar as possible, such that fluctuations in repetition rate and carrier envelope offset frequency seen by each comb are similar.

- Pump for each comb derived from a single pump laser and focused to the same beam size in the gain medium, such that each comb sees identical or at least highly correlated pump noise.

- Laser design such that the "transfer function" from pump intensity noise to laser noise are the same for each comb. This transfer function describes how small pump fluctuations at each noise frequency couple to laser noise at the same frequency. To achieve this matching of transfer functions, it is favorable for the following to be the same for each comb: gain spectrum in the gain element; group delay dispersion in the cavity; beam size, refractive index, and nonlinear refractive index in nonlinear elements. The biprism enables this because each comb can share the same optical components and the same polarization.

- The combs should not experience "cross talk". That is, there should not be a mechanism in the dual-comb laser cavity that causes light from one comb to couple into the other. Such a mechanism could be linear (e.g. from clipping of the beams on the biprism), from cross-saturation of the gain element, or another nonlinear mechanism (e.g. from the two combs overlapping on a nonlinear medium such as the mode locker or the gain element if the gain element is for example a gain element providing self-phase modulation). The approach according to the present invention enables this because it yields spatially distinct cavity modes, which allows for designs with minimal cross-talk.

For designing an optical arrangement of the apparatus, the following procedure may be chosen:

Firstly, for a chosen position of the passive device in a cavity, first it needs to be determined if the introduced positive or negative angle offset will produce a closed path.

This may be determined by considering how the modes of the optical cavity are displaced from the original optical axis when an angular deflection is introduced at the chosen point in the cavity. In particular, the angular deflection will cause a ray deflection towards or away from the original optical axis (the mode position in the absence of the angular deflection).

For positions where the deflection is towards the optical axis, a reflective biprism with $\delta>0$ is not suitable. For positions where the deflection is away from the optical axis, a transmissive biprism with $\delta>0$ is not suitable.

Next, once a closed ray path is determined with a reflective or transmissive biprism, then the transverse separation between the two modes may be studied. This may include determining if the introduced transversal modal separation is within the aperture of the intracavity optical elements.

This procedure applies independent of whether the apparatus is a source of pulsed radiation or a source of CW radiation.

In the context of mode-locked dual-comb laser oscillators further optimization steps may be taken. The introduced displacement between the optical modes may for example to be controlled such that modal separation is appropriate on active elements, such as gain, mode-locking element such as SESAM®, optical parametric amplification medium, second-harmonic generation medium, or any other elements with which the pulses can interact (such as optical windows which are used to generate self-phase modulation) and finally that modal separation is appropriate on the passive device itself. In many embodiments, it is beneficial to achieve sufficient modal separation on the passive device so that the apex of the biprism does not cause modal distortions due to clipping of the beams.

Furthermore, to maximize mutual coherence between the combs in the cavity, the transversal separation of the cavity modes may be kept as low as possible, but not too low so that the combs would start interacting with each other (leading to cross-talk). This is achieved by optimization of the biprism position, its apex angle and general cavity design considerations utilizing a ray transfer matrix calculation combined with ray tracing developed for this purpose.

Finally, for dual-comb laser applications a desired repetition rate difference may be achieved. When a reflective biprism is translated transverse to the laser beam by a distance x, the distance travelled by the two combs changes. The change in $\Delta f_{rep}$ so introduced can be estimated according to

$$\frac{d\Delta f_{rep}}{dx} \approx \frac{4\theta_{biprism}}{c} f_{rep}^2$$

Here a small angle approximation and a very small $\Delta f_{rep}$ compared to the two repetition rates themselves have been assumed. For $f_{rep}$=80-MHz, and biprism angle (180° minus the apex angle) $\delta_{biprism}$ =1° one obtains approximately 1500 Hz/mm.

In experimental investigations, one could achieve repetition rate difference tunable from -800 Hz to 800 Hz for an 80 MHz oscillator, i. e. the beam path length difference amounted to between 0 and 1:100'000. This is an optimal tuning range necessary for dual-comb applications in such a laser. Hence, the 1° biprism used was found to be highly suitable for simultaneously separating the beams by the appropriate amount, and for achieving the appropriate range of repetition rate difference.

When referring to optical path length in the context of calculating the pulse repetition rate of the laser, the optical path length may be defined to refer to the product of the geometric length of the path radiation follows, and the group index of the medium through which it propagates.

Here group index is defined in terms of the propagation coefficient k=n(omega)*omega/c. Here n(omega) is the refractive index and omega is the angular frequency of the optical wave. The group index is then $n_g$=c * d(k)/d(omega)

The apparatus according to the invention can be used for multi-heterodyne optical spectroscopy. This kind of spectroscopy features the advantage that due to signal mixing, signals (such as absorption signals) in a frequency range that is difficult to detect are transferred into a frequency range in which detection is easier, for example from the terahertz or petahertz region into the MHz or even kHz range, depending on the frequency shift between the two signals. One example would be for gas detection. Due to the possibility of coherently broadening or shifting the spectrum afterwards, a large wavelength spectrum can be covered at the same time. This has the advantage that multiple gases can be detected at the same time, or more complex gases with a broad absorption spectrum can be measured. A special set-up using this technique has for example been described in I. Coddington, N. Newbury, and W. Swann, "Dual-comb spectroscopy," Optica 3, 414-426 (2016).

Another area of application is asynchronous optical sampling (ASOPS), which is a form of equivalent time sampling (ETS). This pump-probe technique makes use of the fact that the two pulse trains have a small difference in pulse repetition rate. This has the effect that the delay between the two pulses is linearly increased over time. Thus, the full range of time delays is automatically scanned through. A fast detection mechanism can extract the pump-probe information from the delayed pulses without using conventional moving optical delay lines. ASOPS has for example been described by P. Elzinga et al, "Pump/probe method for fast analysis of visible spectral signatures utilizing asynchronous optical sampling", Applied Optics 26, p.4303 (1987).

A third application would be laser ranging, of which the so-called fiber Bragg grating sensing is an example. This type of measurement was introduced in I. Coddington, W. C. Swann, L. Nenadovic, and N. R. Newbury, "Rapid and precise absolute distance measurements at long range," Nat. Photonics 3, 351-356 (2009). Here one of the combs is sent to a target and gets reflected. The other comb acts as a local oscillator and is combined interferometrically with the reflected beam. This allows for extracting the time-dependent absolute distance to the target by the timing of the interference signal. The reflected or transmitted beam can be analyzed with the other comb from the radiation source. The complete optical spectrum is in this way converted to the RF domain and can be analyzed using conventional electronics. This is basically also a multi-heterodyne spectroscopy system as described for gas sensing.

Other measurement methods relying on spectroscopic information could be imagined as well.

The invention therefore also concerns a combination of the radiation source as described herein with a dual-comb spectrometer, with an ASOPS optical sampler, or LIDAR apparatus. The invention also concerns the use of the radiation source for dual-comb spectroscopy, ASOPS, or laser ranging or other spectroscopic applications relying on multi-heterodyne spectroscopy with the two frequency combs.

BRIEF DESCRIPTION OF THE DRAWINGS

Hereinafter, embodiments of the present invention are described referring to drawings. In the drawings, same reference numbers denote same or analogous elements. The drawings are schematical and not to scale. They show:

Fig. 1 an apparatus for emitting laser radiation;
Fig. 2 a biprism being an example of a passive device for an apparatus for emitting laser radiation;
Fig. 3 a cross section through a biprism;
Figs. 4 and 5 cross sections through a transmissive and a reflective biprism, respectively, with beam paths.
Fig. 6 a cross section through an alternative biprism;
Fig. 7 a cross section through an axicon being a further example of a passive device; and
Fig. 8 an alternative apparatus for emitting laser radiation.

DESCRIPTION OF THE PREFERRED EMBODIMENTS

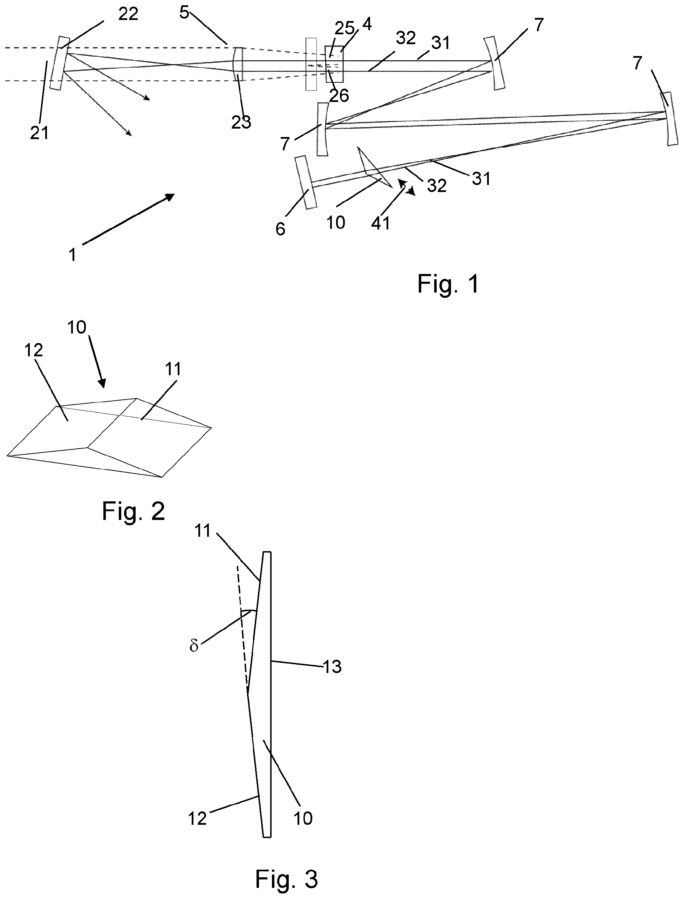

The radiation source 1 shown in **Figure 1** comprises a laser resonator formed between an end mirror 6 and an output coupling mirror 5, with a laser gain element 4 placed close to the output coupling mirror 5. The laser resonator further has a plurality of folding mirrors 7 that, as known in the art, have the function of keeping the apparatus compact compared to the optical length of the laser resonator, and that may further have the function of collimating the beam circulating in the laser resonator. To this end, the mirrors may be curved and their curvature and/or positions may be connected with stable cavity mode formation.

In the depicted embodiment, the end mirror 6 is a saturable absorber reflector element that may for example be a saturable semiconductor absorber mirror sold under the trademark SESAM® or another saturable absorber mirror, whereby the apparatus is a passively modelocked laser. Passive modelocking could also be achieved if instead of an end mirror one of the folding mirrors was a saturable absorber reflector, or by using a different passive modelocker such as a Kerr lens mode locker (KLM).

It is particularly also possible that the gain element, the biprism or a separate medium are the KLM medium.

The laser gain element 4 in the depicted embodiment is a standard solid-state laser gain element that is optically pumped by pump radiation, schematically shown by dashed lines, that impinge on the laser gain element 4. The pump radiation impinges on the gain element via a dichroic mirror 22 that is transparent for the pump radiation but reflective for the laser radiation and an optional collimating lens 23 as well as via the output coupling mirror 5. As is schematically shown, the pump radiation comprises two pump radiation portions (pump beams) 25, 26 impinging on spatially separated positions on the laser gain element. To this end, radiation from a single pump source, such as a pump laser or an arrangement of pump lasers, is split by a beam splitter (for example a non-polarizing 50:50 beam splitter or polarizing beam splitter), recombined next to each other by reflecting one on a D-shaped mirror, and subject to 4f-imaging.

As an alternative, two separate pump lasers could be used to pump the two positions. Another alternative being spatially splitting the pump beam by passing it though a biprism or a single or a pair of wedged windows.

The pump source itself may comprise of-the-shelf low-cost diode lasers.

The laser resonator comprises a biprism 10 as a passive device. The biprism is placed relative to the other components of the laser resonator so that two laser beams 31, 32 that are spatially separated from each other for example on the end mirror and in the laser gain element 4 exist in the laser resonator. The laser resonator comprising the biprism defines resonator modes for two distinct laser beams 31, 32 going through different ones of the two biprism surfaces 11, 12 **(Figures 2 and 3).** The small angle $\delta$ between the biprism surfaces 11, 12 makes the co-existence of the two defined laser beams 31, 32 possible. In the depicted embodiment, the biprism is inserted in the laser resonator at the Brewster angle so as to control the polarization of the laser radiation.

The positions of the pump radiation portions 25, 26 on the laser gain element 4 are chosen so that the first pump radiation portion 25 is incident where the first laser beam 31 traverses the laser gain element, and the second pump radiation portion 26 is incident where the second laser beam 32 traverses the laser gain element.

The apparatus may further comprise an adjustment mechanism 41 for adjusting a position of the biprism 10 relative to the other components of the laser resonator, for example transversally to the direction of the laser beams 31, 32, so that an optical beam path difference between the laser beams 31, 32 can be adjusted. For example, an upward movement of the biprism 10 in Fig. 1 yields a longer optical path length of the second radiation portion 32 and a shorter optical path length of the first radiation portion 31.

The following pertains generally to embodiments having a mechanism for adjusting the position of the passive device.:

There is a general issue in these kinds of systems where the range of the delay scan between the two radiation portions, given by the inverse of their repetition rate, is larger than ideal for certain applications.

A way to overcome this issue via the present invention would be to apply a periodic modulation on the repetition rate difference via moving the biprism orthogonal to the propagation direction of the radiation portions. In order to do this at high speed and with high position resolution, the biprism could be mounted on a piezoelectric transducer (PZT). Using a PZT is, of course, also an option for embodiments with the biprism moved in other directions than orthogonal.

Thus, embodiments of the invention cover:

- Modulation of the passive element position by translating it transverse to the cavity mode with a PZT; and/or

- Electronic control of the delay between the combs via this PZT.

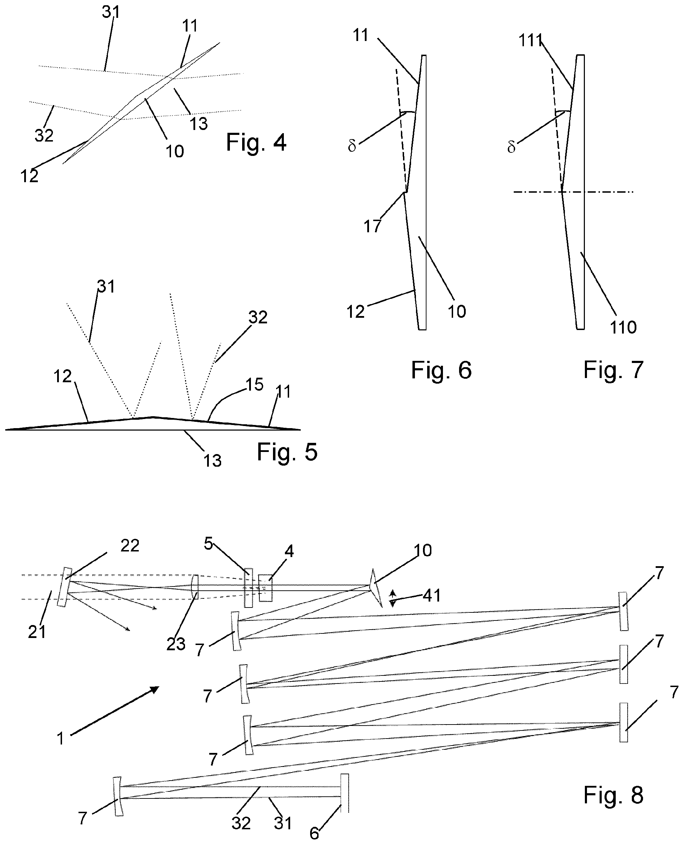

**Figure 4** schematically illustrates the two beam paths of the laser beams 31, 32 defined by the resonator modes for a transmissive biprism where the beam paths undergo refraction at the first biprism surface 11 and the biprism backside 13, and at the second biprism surface 12 and the biprism backside 13, respectively. The biprism backside is a plane surface being at the Brewster angle relative to the beams 31, 32.

As an alternative to being operated in transmission, the biprism 10 can also be operated in reflection, as shown in **Figure 5.** Then, the two biprism surfaces 11, 12 comprise a reflective coating 15. Again, the resonator modes define two beam paths for two distinct laser beams 31, 32.

In embodiments with the biprism 10 operated in reflection, the backside 13 does not have any role and can thus have any shape and any property. It would even be possible to replace the biprism by two separate mirrors at an angle to each other, i.e., the passive device then comprises two intracavity mirrors instead of a biprism. Even though in such a configuration, there may be more differences in fluctuations between the parts of the device compared to embodiments in which the device is monolithic, there may be situations in which such drawbacks may be tolerable.

Further variations of the passive device are illustrated in **Figures 6 and 7.**

Fig. 6 shows a biprism with the biprism surfaces 11, 12 not meeting at the apex 17 but being offset by a small amount of for example 10-1000 $\mu$m or 10-100 $\mu$m in order to provide an offset in the repetition rate difference.

Fig. 7 shows an embodiment in which the passive device is monolithic but is not a biprism but an axicon 110 with a conical axicon surface 111 and with a cone opening angle (cone aperture) of 180°-$\delta$. Similar to the embodiments in which the passive device is a biprism, the resonator modes define at least two beam paths. The use of the axicon - or alternatively a pair of axicons - can in principle enable the creation of a continuum of modes, and thus by pumping a right position on a gain crystal, one could achieve different cavity modes at different repetition rate differences.

**Figure 8** shows a radiation source 1 for emitting two trains of laser pulses for which a biprism 10 is operated in reflection. Apart from the difference between the operation in transmission (Fig. 1) vs. operation in reflection (Fig. 8), the principles are similar between these figures.

Both, in embodiments with a biprism operated in transmission (Fig. 1) and in embodiments with a biprism operated in reflection (Fig. 8), the biprism orientation in the laser cavity may matter. It can be oriented horizontally (as indicated in Fig. 1 and Fig 8) or vertically. It is possible that this choice may influence the noise of the laser, e.g. due to the extent to which mechanical vibration modes of the housing couple to timing jitter. The present invention, therefore, generally covers both, biprism apex angles being oriented vertically and biprism apex angles oriented horizontally.

Both, embodiments according to the principle of Fig. 1 and embodiments according to the principle of Fig. 8 have been experimentally proven to yield dual comb operation with a tunable repetition rate difference, with minimal cross-talk between the combs (much less than $10^{-4}$). Operation was possible on a single laser polarization using a linear laser cavity. Also, the solutions have been proven to be scalable to a wide range of parameters, namely repetition rate, average power, wavelength.

For the embodiment of Fig. 1, a commercially available Fresnel biprism (Newlight Photonics Inc.) was used. The biprism was made out of UVFS and had dimensions of: 20x20x1 mm, with a biprism angle of 1 degree (apex angle of 179 degrees).

In an example, for the embodiment of Fig. 8, the same biprism was provided with a high reflectivity coating (reflectivity >99.95% and a low dispersion). The reflectivity coating was deposited with a sputtering machine in a conventional coating process.

In an example, a laser performance of 2 W average power per comb, 135 fs pulse duration and a repetition rate of 80 MHz has been achieved, at a wavelength of 1052 nm, with a set-up substantially as illustrated in Fig. 8.

The examples of Fig. 1 and Fig. 8 have architectures that are close to architectures of standard pulsed lasers - and hence are relatively straightforward to implement.

Various modifications can be made:

• Use of a multi-prism instead of a biprism: that is, a passive optical device in which one side is comprised of more than two flat regions with a certain angle between them. This would allow to create more than two combs in the same laser resonator.

The following variations all apply for a multi-prism as well as a biprism:

• Shaping the gain medium itself into a biprism, or optical bonding of a biprism to the gain medium.

• A monolithic cavity with all intracavity optics (including the biprism) being bonded together to improve the stability while maintaining a fixed repetition rate difference between the combs. This can also be implemented in part, for example by bonding some of the elements to each other, for example the gain element and the saturable absorber, while other elements (such as the biprism) may remain separate.

• A resonator where the biprism is exchanged with separate wedged windows, especially when operated in transmission. Such prisms can be used to tune the repetition rate or carrier envelope offset frequency of the individual combs.

• A biprism where its second surface is not flat, but for instance is curved or otherwise optimized for beam shaping. This can serve as a cavity multiplexing device and also have another function, such as focusing or defocusing the laser beam.

Various other modifications are possible.

## Claims

1. An apparatus (1) for emitting electromagnetic radiation, comprising:

   - a gain element (4);
   - an optical arrangement defining a resonator and arranged to re-direct radiation emitted by the gain element (4) along a beam path back onto the gain element (4), the optical arrangement comprising an output coupler (5) configured to couple radiation produced by the gain element out of the resonator;
   - a pump arrangement configured to pump the gain element (4);
   - wherein the optical arrangement further comprises a passive device (10, 110) placed in the resonator in the beam path, the passive device having at least two surface portions (11, 12; 111) at an angle to each other, wherein the passive device (10, 110) is arranged to direct first radiation portions (31) and second radiation portions (32) of the radiation, which first and second radiation portions (31, 32) are incident on different ones of the surface portions (11, 12; 111), to be spatially separated.

2. The apparatus according to claim 1, wherein the gain element is a laser gain element, and wherein the output coupler (5) is configured to couple a portion of the radiation in the resonator out of the resonator.

3. The apparatus according to claim 1, wherein the gain element is a nonlinear optical gain medium generating radiation at a different frequency from a pump frequency, such as an optical parametric amplification medium, and wherein the output coupler (5) is configured to couple a portion of the radiation in the resonator out of the resonator or is configured to couple idler radiation produced, in the gain element, by optical parametric amplification out of the resonator.

4. The apparatus according to any one of the previous claims, wherein the optical arrangement comprises a mode locker (6) placed in the resonator in the beam path, whereby the first and second radiation portions (31, 32) form a first and second modelocked pulsed beam.

5. The apparatus according to claim 4, wherein the mode locker (6) is a passive mode locker.

6. The apparatus according to claim 5, wherein the mode locker (6) comprises a saturable absorber.

7. The apparatus according to claim 6, wherein the saturable absorber is integrated in a layered semiconductor structure that acts as a reflector for the radiation in the resonator.

8. The apparatus according to any one of claims 4 -7, wherein the first radiation portion and the second radiation portion are incident on spatially separated spots on the mode locker.

9. The apparatus according to any one of the previous claims, wherein the first and second radiation portions (31, 32) interact with the gain element (4) at different first and second positions.

10. The apparatus according to claim 9, wherein the pump arrangement comprises an optical pump configured to generate a pumping radiation (21) and to direct the pumping radiation (21) onto the gain element (4), wherein the pump arrangement comprises a beam splitter for splitting the pumping radiation (21) between a portion incident on the first position and a portion incident on the second position.

11. The apparatus according to claim 10, wherein a transfer function from pump intensity noise to radiation portion noise are the same for each radiation portion.

12. The apparatus according to any one of the previous claims, wherein the passive device (10, 110) is a single monolithic element.

13. The apparatus according to claim 12, wherein the passive device (10, 110) is a biprism or an axicon.

14. The apparatus according to any one of the previous claims, further comprising an adjustment mechanism (41) for adjusting a position of the passive device (10, 110) relative to other components of the optical arrangement, whereby a difference between optical beam path lengths of the first radiation portion (31) and of the second radiation portion (32) is adjustable.

15. The apparatus according to any one of the previous claims, wherein the first and second radiation portions (31, 32) share the same elements of the optical arrangement by every element of the optical arrangement interacting with both radiation portions.

Fig. 1

Fig. 2

Fig. 3

Fig. 4

Fig. 5

Fig. 6

Fig. 7

Fig. 8

Europäisches Patentamt

European Patent Office

Office européen des brevets

# EUROPEAN SEARCH REPORT

Application Number

EP 21 19 0032

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NICOLAS BOURBEAU H\'EBERT ET AL: "Self-corrected chip-based dual-comb spectrometer", ARXIV.ORG, CORNELL UNIVERSITY LIBRARY, 201 OLIN LIBRARY CORNELL UNIVERSITY ITHACA, NY 14853, 27 February 2017 (2017-02-27), XP080956663, DOI: 10.1364/OE.25.008168 | 1-15 | INV. H01S3/10 H01S3/11 H01S3/23 ADD. H01S3/06 H01S3/08 H01S3/081 |
| Y | * page 2, left-hand column, paragraph 2 – page 6, left-hand column, paragraph 1; figures 1-3,7 * | 13 | H01S3/094 H01S3/0941 H01S3/105 H01S3/106 |
| X | MACIEJ KOWALCZYK ET AL: "Dual-comb femtosecond solid-state laser with inherent polarization-multiplexing", ARXIV.ORG, CORNELL UNIVERSITY LIBRARY, 201 OLIN LIBRARY CORNELL UNIVERSITY ITHACA, NY 14853, 17 June 2021 (2021-06-17), XP081933134, DOI: 10.1002/LPOR.202000441 | 1-8 | |
| Y | * page 3, paragraph 4 – page 9, paragraph 2; figures 1-6 * | 1-15 | TECHNICAL FIELDS SEARCHED (IPC) H01S |
| Y | ENDO J ET AL: "TRANSMISSION LASER MICROSCOPE USING THE PHASE-SHIFTING TECHNIQUE AND ITS APPLICATION TO MEASUREMENT OF OPTICAL WAVEGUIDES", APPLIED OPTICS, OPTICAL SOCIETY OF AMERICA, WASHINGTON, DC, US, vol. 41, no. 7, 1 March 2002 (2002-03-01), pages 1308-1314, XP001111630, ISSN: 0003-6935, DOI: 10.1364/AO.41.001308 * page 1308, right-hand column, paragraph 3 – page 1310, right-hand column, paragraph 3; figures 1,2 * | 1-15 | |

The present search report has been drawn up for all claims

| Place of search | Date of completion of the search | Examiner |
|---|---|---|
| Munich | 7 January 2022 | Laenen, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016049787 A
- WO 2001059895 A
- WO 2005098573 A

**Non-patent literature cited in the description**

- **I. CODDINGTON ; N. NEWBURY ; W. SWANN.** Dual-comb spectroscopy. *Optica,* 2016, vol. 3, 414-426
- **P. ELZINGA et al.** Pump/probe method for fast analysis of visible spectral signatures utilizing asynchronous optical sampling. *Applied Optics,* 1987, vol. 26, 4303
- **I. CODDINGTON ; W. C. SWANN ; L. NENADOVIC ; N. R. NEWBURY.** Rapid and precise absolute distance measurements at long range. *Nat. Photonics,* 2009, vol. 3, 351-356